# EUROPEAN PATENT SPECIFICATION

(11) **EP 0 413 488 B1**
(45) Date of publication and mention of the grant of the patent: **05.03.1997**
(21) Application number: 90308648.6
(22) Date of filing: 06.08.1990
(51) Int. Cl.: H04Q 11/04, H04Q 3/545, H04L 12/58, H04L 12/56

(54) **Method for regulating traffic in a high speed data network**
Verfahren zur Verkehrsregelung in einem Hochgeschwindigkeitsdatennetz
Procédé pour régler le trafic dans un réseau de données à grande vitesse

(30) Priority: 15.08.1989 US 394390
(43) Date of publication of application: 20.02.1991
(73) Proprietor: AT&T Corp., New York, NY 10013-2412 (US)
(72) Inventor: Buhrke, Rolfe Erwin, Westchester, Illinois 60153 (US); DeBruler, Dennis L., Downers Grove, Illinois 60515 (US); Punj, Vikram, Naperville, Illinois 60565 (US)
(74) Representative: Buckley, Christopher Simon Thirsk

(56) References cited:
- EP-A- 0 100 594
- IEEE JOURNAL ON SELECTED AREAS IN COMMUNICATIONS., vol.6, no.9, December 1988, NEW YORK pages 1598 - 1608, XP000001607 J. Y. HUI 'Resource Allocation for Broadband Networks.'
- IEEE NETWORK, vol.2, no.1, January 1988, NEW YORK pages 72 - 76 M. GERLA ET AL. 'Congestion Control in interconnected LANs'
- PROCEEDINGS 8TH INTERNATIONAL CONFERENCE ON COMPUTER COMMUNICATION, 15 September 1986, MüNCHEN pages 643 - 647 M. GERLA 'Routing and Flow Control in ISDN's.'
- IEEE INTERNATIONAL CONFERENCE ON COMMUNICATIONS, vol.3 OF 3, 11 June 1989, BOSTON pages 1506 - 1510, XP000075399 D. WRIGHT, M. TO, H.-K. AU 'Broadband Business Access: A Services Perspective on Network Termination Unit Port Requirements.'
- PROCEEDINGS OF THE 12TH INTERNATIONAL TELETRAFFIC CONGRESS., 1 June 1988, TORINO pages 665 - 671, XP279798 R.G. ADDIE, R.E.WARFIELD 'Bandwidth Switching and New Network Architectures.'
- IEEE JOURNAL ON SELECTED AREAS IN COMMUNICATIONS, vol.5, no.8, October 1987, NEW YORK pages 1327 - 1335, XP313592 B. KRAIMECHE, M. SCHWARTZ 'A Channel Access Structure for Wideband ISDN'
- IEEE GLOBECOM, vol.1 OF 3, 28 November 1988, HOLLYWOOD FLORIDA pages 214 - 220, XP42988 GERSHT, LEE 'Virtual-circuit load control in fast packet-switched broadband networks.'

## Description

This invention relates to methods of allocating resources for transmission of data in a data network.

Broadband networks, such as broadband Integrated Services Digital Network (B-ISDN) networks and IEEE 802.6 based metropolitan area networks (MAN), transmit large quantities of high speed data among high speed terminal devices typically using high bandwidth fiber optic systems. The B-ISDN network is described in "Broad Aspects of ISDN - T1S1 Technical Subcommittee", Document T1S1.1/89-200, published by American National Standards Institute (1989), and the 802.6 network is described in "Project 802 - Local and Metropolitan Area Networks Proposed Standard", prepared by the IEEE 802.6 Working Group, June 23, 1989. The data is transmitted using an asynchronous transfer mode (ATM) protocol defined by a CCITT standard. A unique characteristic of this protocol is that bandwidth may be dynamically provisioned. In such networks, terminal devices such as computers, local area networks (LANs), computer peripherals and bus extended processors or peripherals, are typically connected to terminal adapters which interface with the B-ISDN switching network. With the ATM protocol, the network transports segmented blocks or cells of data frames from source terminal adapters to destination terminal adapters.

A problem in this type of network is that while the output of each source terminal adapter is limited to the bandwidth of the fiber optic channel connecting that adapter to the B-ISDN network, at any one instant several source terminal adapters may generate a focused load to a particular destination terminal adapter, which destination adapter is then the destination for more data than can be carried by its destination optic fiber channel. In this case, the excess data is temporarily buffered in the network. Network buffers are costly and therefore desirably limited in size. However, after a short period, excess data cells are simply lost. This loss of data cells creates further problems because any lost data cells will have to be retransmitted as part of a much longer message. The result is that any focused overload of more than the briefest period results in an extended overload of the B-ISDN network. The retransmission not only causes further overloads and an increase in the duration of the overload of the network, but substantially degrades performance by delaying the arrival of the messages between source terminal and destination terminal.

A problem of the prior art, therefore, is that there is a need for a better arrangement in a broadband data network for utilizing transmission capabilities efficiently and for preventing temporary overloads that result in inefficient retransmission of data messages.

IEEE Journal on Selected Areas in Communications, no. 9, vol. 6, December 1988 describes a complex routing algorithm for allocating resources in a broadband network and provides mathematical models for predicting the traffic flow through a network and for designing trunk and switch capacities and routing options based on those predictions. Specifically, blocking probabilities are determined at the packet level, burst level and call level and these probabilities are used to create an algorithm for allocating bandwidth at these different levels. Once an acceptable probability of blocking is determined based on number and duration of calls, the trunks and switches can be sized appropriately. Given a particular network configuration, the questions are addressed of how to select a route across the network and which trunks in a trunk group should be used for the packets of a burst.

According to this invention there is provided a method as claimed in claim 1.

The above problem may be solved and an advance made in the art wherein some or all of the bandwidth at an ingress facility and at an egress facility to a data network is allocated for the transmission of a data message before the message is transmitted. The ingress facility is connected to a terminal transmitting the message and the egress facility is connected to a terminal receiving the message. In an illustrative embodiment, before sending a data message or series of messages between an ingress controller and an egress controller, the amount of bandwidth required to transmit the data message efficiently is determined; a determination is then made of the availability of that amount of bandwidth in the ingress controller and the egress controller, and such bandwidth is allocated if available. The ingress and egress controllers are terminal adapters connected to the ingress and egress facilities, respectively. The act of sending a bandwidth allocation request message to the egress or destination terminal adapter only takes place after the bandwidth has been allocated on the outgoing port of the ingress or source terminal adapter. If such bandwidth is available at the source and destination terminal adapters, this bandwidth is allocated in the destination terminal adapter, and the source and destination terminals may then transfer data between their respective terminals via their respective buffers for storing message data. If a source terminal adapter requests bandwidth which is not available either in the source terminal adapter or the destination terminal adapter, that request is stored in a list of requests at the source terminal adapter.

Availability of bandwidth at the source adapter is ascertained directly by accessing memory within the source adapter. Availability of a requested amount of bandwidth at the destination adapter is ascertained by a short high priority signaling message exchange between the source and destination adapters. If the requested bandwidth is available in the destination adapter, that bandwidth is allocated to the requesting source adapter, and the source adapter is informed in a return signaling message. Requests for which bandwidth have not been allocated are periodically sorted and examined and a new attempt is made to allocate bandwidth to the destination, with the older requests receiving preference. The terminal adapter may allocate at any one time as much bandwidth as it has remaining unallocated bandwidth available, and request an allocation of the corresponding destination adapter. If the source adapter receives a negative response from the destination adapter indicating that the destination has not allocated receive bandwidth, the transmit bandwidth allocated for that request is deallocated until a new attempt to allocate is made. A recorded request comprises the amount of bandwidth, the destination, and the time of the request. When the age of a particular request for which bandwidth has not yet been allocated reaches a first threshold, an allocation of the next available block of bandwidth from the source terminal adapter is made for that particular request. Thereafter, the source terminal adapter will repeatedly send request messages to the destination terminal adapter until the destination terminal adapter allocates appropriate bandwidth for receiving from the source terminal adapter, or until the source terminal adapter recognizes that the request has aged beyond a second threshold and times out the request. Advantageously, by limiting the amount of data which is transmitted to each destination terminal adapter, the danger that the broadband network will discard packets within the network is greatly reduced. When all requests cannot be honored, the source terminal adapter discards those messages which cannot be transmitted at that time. Advantageously, by reserving transmission bandwidth of a source terminal adapter, complete messages from source terminals may be transmitted without overloading the source terminal adapter. Advantageously, a backup provision is provided so that, except under conditions of very high overload, messages are not deferred beyond a critical value.

A terminal adapter is used for interfacing between a plurality of terminals and the data network. The terminal adapter is controlled by a program-controlled processor. The program controls the selection of data messages for transmission between storage of the adapter and the network and terminals. The program also controls the allocation of transmit and receive bandwidth, and the generation and transmission of signaling messages for requesting and reporting receive bandwidth allocation. The terminal adapter comprises storage for storing data to be transmitted from terminals to the data network and data received from the data network for transmission to the terminals. If the full amount of bandwidth is not available at the receive terminal adapter, a determination is made whether at least some predetermined reasonable fraction, for example, three-quarters, of the full determined bandwidth is available. If so, the available bandwidth is allocated, and the return message requests that the allocated transmit bandwidth be reduced to match the receive bandwidth.

Accordingly, this invention relates to methods for transmitting data from a transmitting terminal to a receiving terminal by allocating transmitting and receiving bandwidth to the terminals prior to transmitting data messages between them.

### Brief Description of the Drawing

FIG. 1 illustrates an illustrative embodiment wherein a group of terminal adapters are connected to a broadband ISDN network for communicating messages between terminals connected to the terminal adapters; and
FIG. 2 is a block diagram of the terminal adapter of FIG. 1; and
FIGS. 3-8 are flow charts of processes executed in the terminal adapters.

### Detailed Description

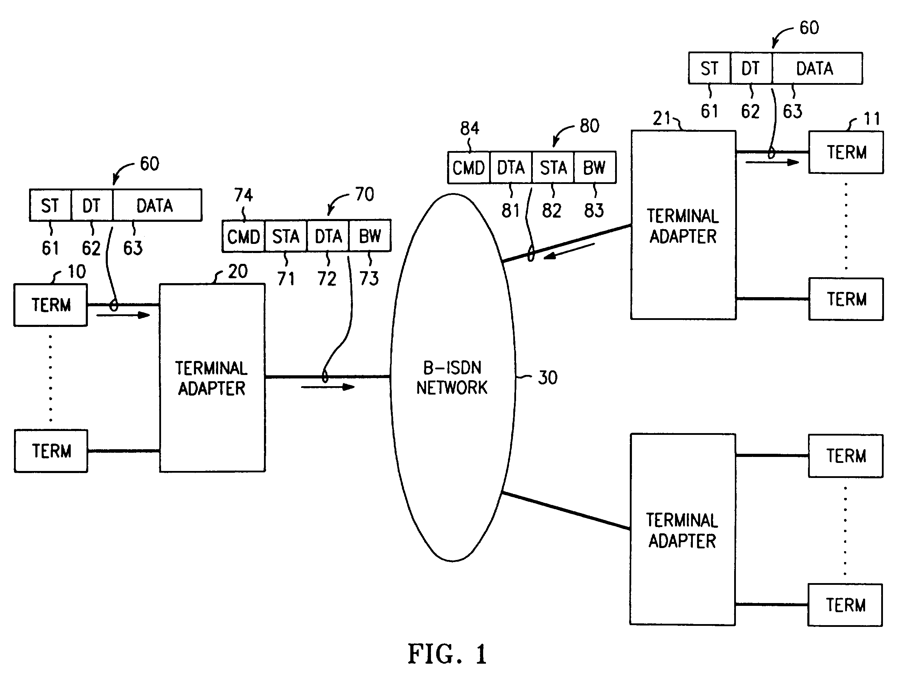

FIG. 1 illustrates the operation of an exemplary embodiment.

A broadband ISDN network 30 is used for interconnecting terminal adapters 20,21,... . Each of the terminal adapters is connected to a group of terminals such as terminal 10 and terminal 11. The function of the broadband ISDN network is to provide a facility for switching data cells among the connected terminal adapters. Each terminal adapter is connected to the network by an optic fiber facility. Data is sent over these optic fiber facilities using a standard protocol known as the asynchronous transfer mode (ATM) wherein a plurality of individual data cells, each of which may contain data for a different message, are collected to form a data frame. At intermediate points within the network 30, individual cells are switched such that cells destined for data terminals 10,11,..., are transmitted to their corresponding adapters and are transmitted over that final fiber optic link.

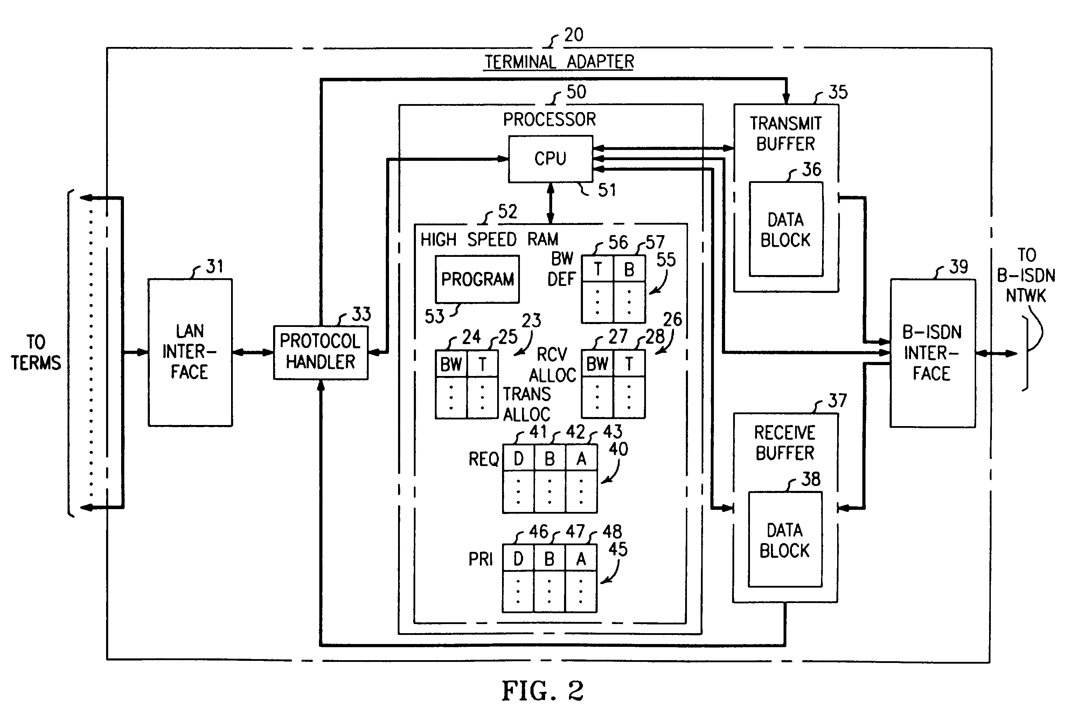

The terminal adapter is shown in FIG. 2. Each terminal adapter is controlled by processor 50 comprising a central processing unit 51 and a high speed random access memory (RAM) 52. The terminal adapter comprises a local area network (LAN) or host computer interface 31 for communicating data from/to the terminals 10,..., connected to terminal adapter 20. The LAN or host computer interface 31 is connected to a protocol converter 33 for communicating requests with processor 50 and data messages with transmit buffer 35 and receive buffer 37. The transmit and receive buffers, each of which contain a plurality of data blocks such as 36 and 38, respectively, communicate with a B-ISDN interface 39 for communicating with the B-ISDN network 30. The interface 39 implements the processing required to generate ATM cells, segment data blocks, and reassemble data from the cells. It maintains the optic fiber transmission and derives clocking from the network. The interface 39 constructs messages 36 in memory 35 from cells arriving from the fiber, and segments messages 38 into cells for transmission on the fiber. More than one message is processed at one time because calls from different messages are interleaved. After CPU 51 constructs a message in memory 35, it instructs interface 39 to transmit the message by writing a block identifier into a buffer read by the interface 39. Similarly, when the interface 39 completes construction of the message, it writes a block identifier into a buffer read by CPU 51. The interface passes on verified and correct data into the receive buffer 37. The processor 50 controls all TA functions such as table maintenance, scheduling the sending of requests, and performs the operations, administration and maintenance functions for the TA.

If terminal 10 connected to terminal adapter 20 wishes to transmit a message to terminal 11 connected to terminal adapter 21 then terminal 10 sends the message 60 comprising an identification of the sending terminal 61, the destination terminal 62, and data of the message including the requested bandwidth 63 to terminal adapter 20. Terminal adapter 20 first determines the bandwidth required or appropriate for the transmission of the data message to terminal 11 by consulting table 55 which defines the transmitting bandwidth 57 of each terminal 56. Suppose that the correct bandwidth for the transmission of this data message is 24 megabits/second. Terminal adapter 20 then sends message 70 over broadband ISDN network 30 to terminal adapter 21. Message 70 comprises an identification of the sending terminal adapter 71, the destination terminal adapter 72, the requested bandwidth for the transmission 73, and a command 74, in this case, a request to allocate command. Terminal adapter 21 responds to this message by checking its own allocated input bandwidth to determine if 24 megabits/second of bandwidth are still available. If so, it allocates 24 megabits of bandwidth and sends a confirmation message 80 over the B-ISDN network 30 to terminal adapter 20. The confirmation message includes the destination terminal adapter identification 81, source terminal adapter identification 82, the allocated bandwidth 83, and a command 84, in this case, a report that the bandwidth has been allocated. This allocated bandwidth may be less than the requested bandwidth if the destination TA is heavily loaded. Thereafter, the data message 60 is sent from terminal adapter 20 to terminal adapter 21 over the broadband ISDN network 30 at the allocated bandwidth of, for example, 24 megabits/second as determined by the response of the destination TA. Terminal adapter 21 receives the message and then passes the data message 60 to the connected destination terminal 11. After the data message 60 has been sent, the 24 megabits of bandwidth are deallocated and made available in the transmitting bandwidth of terminal adapter 20 and the receiving bandwidth of terminal adapter 21. The deallocation process is the same as the allocation process, comprising a deallocation in the sending terminal adapter 20, a deallocation message similar to message 70 to the receiving terminal adapter 21, a deallocation of the bandwidth in terminal adapter 21, and a return message similar to message 80 confirming the deallocation.

Each terminal adapter keeps track of the allocated bandwidth for receiving and for transmitting. As a result, multiple messages may be transmitted and received simultaneously in each terminal adapter provided that the sum of the allocated bandwidths of these messages does not exceed the transmission and reception capability of the access to the B-ISDN network. This sum including bandwidth permanently allocated for signaling, is audited and checked before each allocation.

Each terminal adapter, such as 20, maintains a table 23 of allocated bandwidths 24 and associated terminals 25 for transmitting and a similar table 26 of allocated bandwidths 27 and associated terminals 28 for receiving. This table is checked to determine if bandwidth is available for allocation, and, if so, the allocation is entered in the table when made.

When a request to transmit is received in the terminal adapter an entry is made in a request file 40 of transmitting terminal adapter 20. This entry comprises segment 41 identifying the destination terminal adapter, segment 42 identifying the amount of requested bandwidth, and segment 43 for keeping track of the age of the request. If sufficient transmitting bandwidth is not available at the sending terminal adapter 20 or receiving bandwidth is not available at destination terminal adapter 21, the next entry in the request file 40 of terminal adapter 20 is examined to determine the next message that is to be sent. For each entry in the request file, repeated attempts are made to allocate transmitting bandwidth at the sending terminal adapter and receiving bandwidth at the destination terminal adapter. When one of these attempts is successful, then transmission between the sending terminal adapter and destination terminal adapter is established, the request is cleared from the file, and the message is sent. If attempts to allocate this bandwidth are not successful at the sending terminal adapter, then after a first critical time the request is removed from the request file and is placed in priority file 45 which identifies the destination (segment 46), the bandwidth (segment 47), and the age (segment 48). When bandwidth is made available as a result of the completion of sending a message in sending terminal adapter 20, then the priority file is first checked to see if there are any requests in the priority file since such requests will be accepted first.

If a sending terminal adapter has messages in the request file, it will poll the receiving terminal adapters to determine which ones have the needed bandwidth and will transmit messages to all receiving terminal adapters for which there is available bandwidth, subject to availability of bandwidth in the sending terminal adapter. If there is any message in the priority file, the terminal adapter will concentrate on sending that message as soon as possible without concern for messages in the request file. Subsequently, if no bandwidth is allocated in the sending and destination adapters after a second critical period of time, then the message is deleted from buffers in sending terminal adapter 20; this condition is indicative of sending terminal adapter overflow.

If sending terminal adapter bandwidth has been allocated but the destination terminal adapter has not allocated bandwidth at the time of the first critical timeout, then for all entries in the priority file 45 all of whose ages exceed that critical period of time, repeated requests for bandwidth allocation are transmitted to the destination terminal adapter. If the destination terminal adapter allocates bandwidth before the second critical period of time, then transmission is enabled between the two terminal adapters and the message goes through. If bandwidth has not been allocated by the second critical time indicating destination terminal adapter overflow, then the message is deleted in the sending terminal adapter.

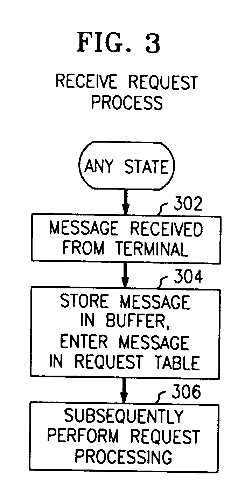

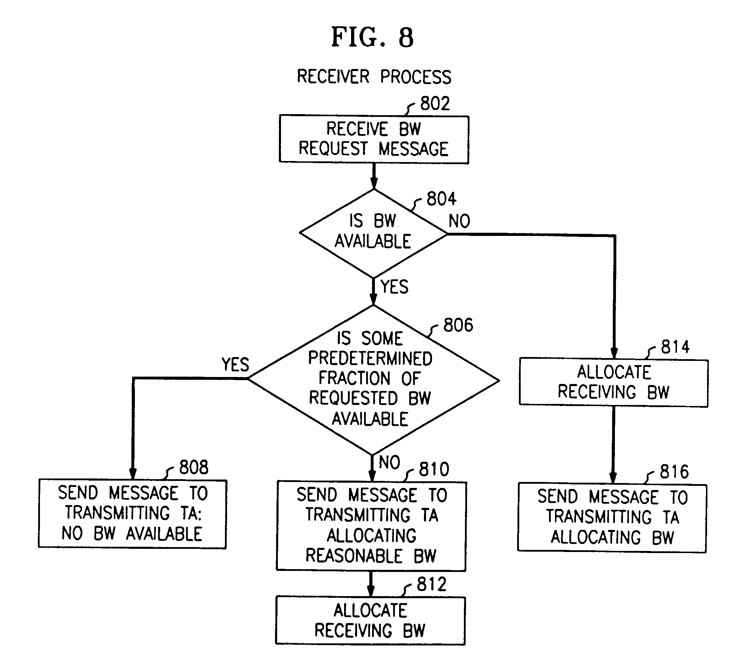

FIGS. 3-8 are flow charts of processes executed in the transmitting terminal adapter (FIGS. 3-7) and the receiving terminal adapter (FIG. 8). FIG. 3 illustrates the process executed in the terminal adapter when a message is received. The message is received from the terminal (action block 302). The message is then stored in a buffer of the terminal adapter (transmit buffer 35) and entered in the message request table 40 (action block 304). At some subsequent time, request processing of all entries in the request table 40 is performed.

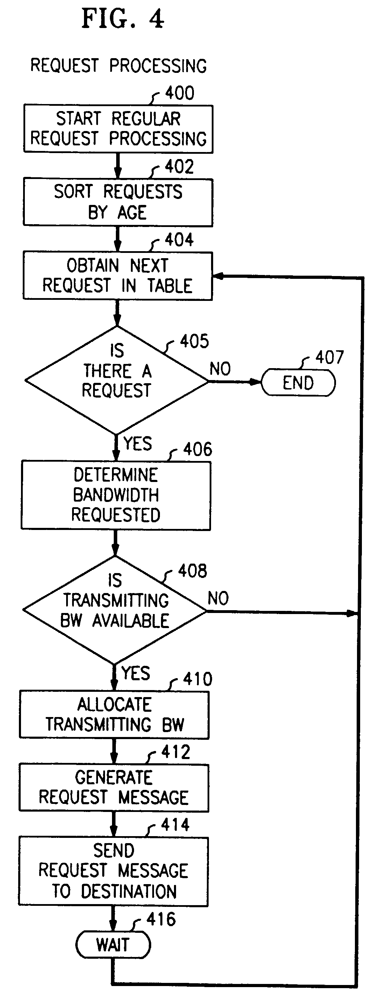

FIG. 4 illustrates the processing of requests in the request hopper. The process is started (action block 400). The requests are sorted by age (action block 402) so that the oldest requests are treated first. The program then executes a loop involving blocks 404-414 to process all requests in the table. The loop begins in block 404 in which the next request in the table is obtained (if block 404 is entered from block 402, then the next request is the first request). Test 405 determines whether there is a request in order to terminate the loop at the appropriate time. If not, the loop is ended (block 407). If there is a request the amount of bandwidth required to honor the request is determined (action block 406). In test 408, a check is made whether transmitting bandwidth requisite for meeting the requirements determined in action block 406 is available. This test compares the amount of transmitting bandwidth already allocated with the total amount of transmitting bandwidth available and if the difference equals or exceeds the determined bandwidth, then transmitting bandwidth is available and is allocated (action block 410). If not, the next request in the table is processed (action block 404). If transmitting bandwidth has been allocated, then a request message is generated (action block 412) and sent to the destination terminal adapter (action block 414). The transmitting terminal adapter then enters a wait state from the point of view of the particular data message for which bandwidth has just been allocated (wait state indicator 416) and proceeds to process other requests in the request table by entering action block 404 previously described.

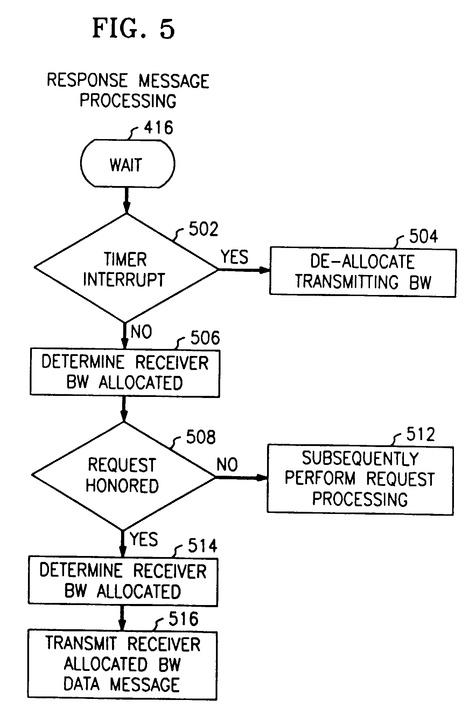

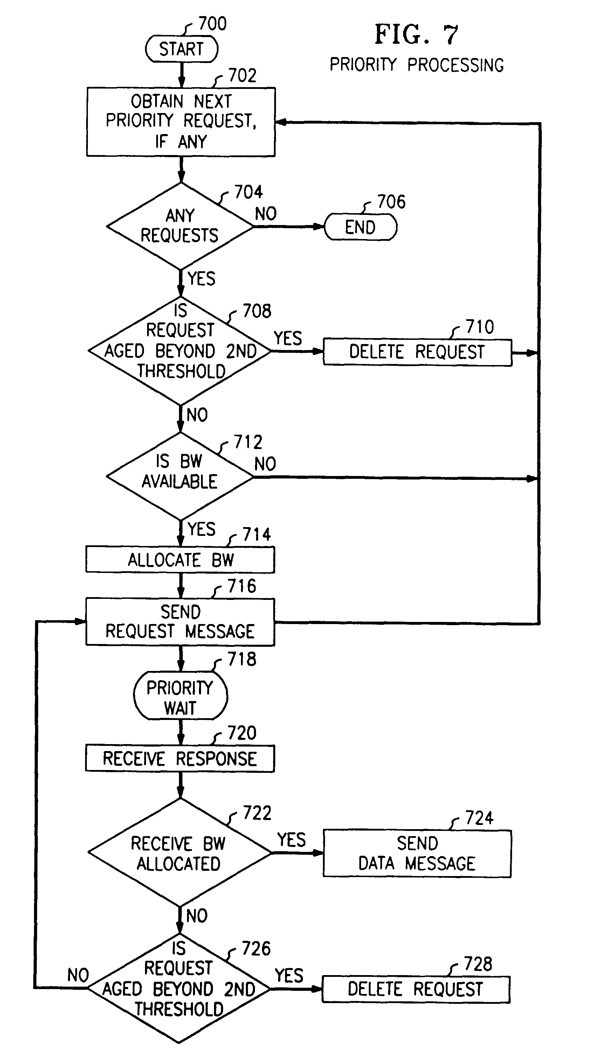

FIG. 5 is a flow diagram illustrating the operations performed in the terminal adapter in processing response messages for the request file requests. The terminal adapter is in the wait state 416 (entered in the flow diagram of FIG. 4) and emerges from this wait state either by a timer interrupt or by receiving a response message. When the terminal adapter leaves the wait state test 502 checks whether it left the wait state through a timer interrupt. If so, then it is assumed that the request message was lost and attempts to transmit the corresponding data message on the basis of the original request from the terminal are abandoned and the bandwidth previously allocated for this purpose is deallocated (action block 504). If a response message has been received (action block 506) then a test 508 is used to determine whether the request has been honored. If not, then the transmitting bandwidth previously allocated in the transmitting terminal adapter is deallocated (action block 510) and the corresponding request from the terminal will subsequently be reprocessed at first in the request processing of FIG. 4 and later in the priority request processing of FIG. 7. At some subsequent time, request processing is performed (action block 512). If the request has been honored as indicated by the positive output of test 508, then the terminal adapter determines how much receiver bandwidth was allocated by the receiving terminal adapter. As will be seen with reference to the discussion of FIG. 8 the receiver terminal adapter has the option of allocating slightly less than the requested bandwidth. The amount of bandwidth allocated by the receiving terminal adapter is determined in action block 514. The data message is then transmitted (action block 516) at the bandwidth allocated by the receiving terminal adapter.

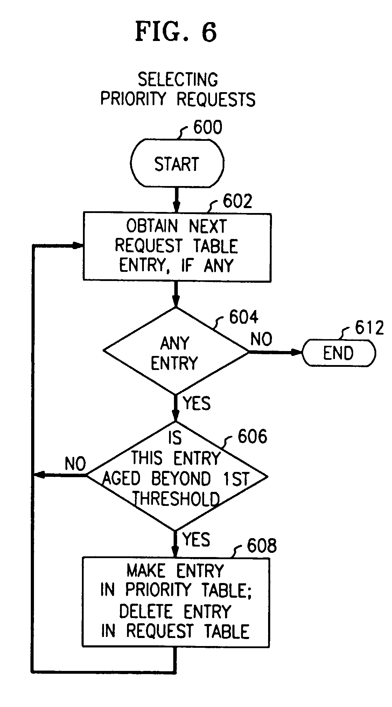

FIG. 6 is a flow chart which illustrates the process of selecting priority requests. The process is started (action block 600) and the next request table entry, if any, is obtained. Test 604 tests whether there is such an entry and if so whether this entry is aged beyond a first threshold. If so, then the entry is moved to the priority table and deleted from the request table (action block 608) and the next entry in the request table is obtained (action block 602). If the entry being examined is not aged beyond the first threshold, a negative result of test 606, then the next request table entry is obtained (action block 602). A negative result of test 604 indicates the absence of further entries in the table, and the process is complete (end process indicator 612).

FIG. 7 is a flow diagram of the actions performed in processing priority requests. Priority requests are those which are in the priority table 45. These requests have aged by an amount greater than a first threshold. Also, if any entry in the priority table ages beyond the second threshold, then the attempt to send the data message corresponding to the request is abandoned and the terminal must initiate a new request to have that data message sent.

The process is started (action block 700) and the next request in the reserve table is obtained (action block 702). The priority process is entered more frequently than the request process. If action block 702 is entered from the start block 700, then the next request is, of course, the first request. Test 704, required to terminate the loop, tests if any priority request was obtained in action block 702. If not, then the priority processing process is completed for the time being (end block 706). If there is a request, then test 708 checks whether the request is aged by more than the second threshold. If so, then the priority request is deleted (action block 710) and the next priority request is examined. If the request is aged by less than the second threshold, a test is made whether transmitting bandwidth is available (test 712). If not, the next priority request is examined. If transmitting bandwidth is available that bandwidth is allocated (action block 714) and a request message is sent (action block 716). Action block 716 has two outputs, the first for continuing the processing of priority requests, and the second for further processing the priority request for which bandwidth has just been allocated. The second output begins with a priority wait (wait indicator 718) from the point of view of the particular data message for which bandwidth has just been allocated. The wait state is terminated when a response is received (action block 720). If the response indicates that receive bandwidth has been allocated (test 722), then the data message is sent (action block 724). If receive bandwidth has not been allocated (negative result of test 722) then test 726 checks to see whether the priority request has now aged beyond the second threshold. If so, the request is deleted (action block 728) with a result similar to that previously described with respect to action block 710. If the request has not aged beyond the second threshold, then the request message is sent again (action block 716). The result of the processing of FIG. 7 is that repeated attempts are made to allocate transmitting bandwidth for requests in the priority table and these attempts supersede any attempt to allocate bandwidth for request entries in the request table; that for any entries in the priority table for which transmit bandwidth has been allocated, repeated request messages are sent to the receive terminal adapter to attempt to allocate receive bandwidth therein; and that for any messages for which transmit and receive bandwidth have not been allocated by the end of the second threshold interval, attempts to transmit these messages based on the original request from the terminal are abandoned and these data messages are subsequently transmitted only in response to a new request.

FIG. 8 illustrates the receive process performed in the terminal adapter. The specific embodiment is arranged so that the receive terminal adapter does not allocate bandwidth unless and until bandwidth has been allocated in the transmitting terminal adapter. This has the advantage of preventing an overloaded receive terminal adapter from backing up messages in many sending terminal adapters, or of preventing sending terminal adapters from deallocating bandwidth before the receiving terminal adapter allocates that bandwidth. The process begins in the receive terminal adapter when a bandwidth request message is received (action block 802). In test 804, a check is made whether the receive bandwidth is available. This check is made by comparing the amount of unallocated bandwidth with the total bandwidth available in the receiving terminal adapter and verifying if the difference equals or exceeds the requested bandwidth. If the bandwidth is available (positive outcome of test 804) then the receiving bandwidth is allocated (action block 814) and a message is sent to the transmitting terminal adapter allocating that bandwidth (action block 816). If bandwidth is not available (negative result of test 804) then test 806 checks whether some predetermined fraction of the requested bandwidth is available. Simulations have shown that a reasonable value of the predetermined fraction might be, for example, three-quarters or more. The exact fraction can be set on the basis of experience and/or on the basis of simulations subsequently augmented by experience in the field. If this predetermined fraction of requested bandwidth is available, then a message is sent to the transmitting terminal adapter specifying the amount of bandwidth allocated for the requested data message (action block 810) and this amount of bandwidth is allocated in the receiving terminal adapter (action block 812). If the amount of bandwidth available is less than that predetermined fraction of the requested bandwidth, then a message is sent to the transmitting terminal adapter indicating that no bandwidth is available (action block 808). The response to the messages sent in action blocks 808 and 810 have been previously described with respect to actions performed following test 508 (FIG. 5) and action block 720 (FIG. 7).

If a terminal is either deliberately made unavailable for maintenance or is discovered by the serving terminal adapter to be faulty, then the serving terminal adapter notifies all other terminal adapters of the unavailability of that terminal. Messages to unavailable terminals are blocked at the transmitting terminal adapters which have been informed of the unavailability of such terminals. In the special case wherein messages indicating unavailability cross with messages requesting allocation of bandwidth, bandwidth is not allocated and during the next attempt the sending terminal adapter will recognize that the destination terminal is unavailable and will block the messages.

This arrangement allows temporary fluctuations in data traffic to be handled smoothly without requiring data entities to be retransmitted. In general, the size of the data entity which must be retransmitted is a function of the protocol of the sending and destination and terminals, and is many cells long. Thus, any transmission arrangement which allows an occasional random Asynchronous Transfer Mode (ATM) frame to be lost forces the retransmission of many such frames and therefore causes a snowballing of a minor temporary overload condition. By controlling transmission over the broadband data network so that transmission is only possible when both source and destination bandwidth is available, such snowballing is avoided.

Alternative schemes for throttling transmission have been used in other networks. In one such scheme, the size of the queues at the destination terminal or at some destination data concentrator is monitored and if the size becomes too great then messages are sent to the sources of the data message to cut back on transmission. The trouble with this type of arrangement is that in a broadband ISDN network, the transmission rate is so high that by the time a message is received to lower the transmission rate, the queues at the destination have experienced overflow.

In this embodiment each terminal may address 255 other terminals. The network is limited to interconnecting 256 such terminals because only one byte is allocated to identifying the destination terminal. In a more general application, the identifying field can be as large as the combination of the ATM address label virtual circuit identifier (VCI) (20 bits) and the message identifier (MID) (14 bits) which would expand the number of possible terminals to 2³⁴ (16 billion), a number far in excess of any conceivable need.

While this description has concentrated on bandwidth as the negotiated resource, other limiting resources, such as memories in the terminal adapters, and time to transmit a message can also be negotiated in a similar way. For example, allocation of bandwidth for a very long message might be deferred if the load is above a threshold.

While in this embodiment, requests are immediately entered in the request file, it is also possible to enter them in the request file only after making a first unsuccessful attempt to allocate bandwidth at the source and destination adapters.

It is to be understood that the above description is only of one preferred embodiment. Numerous other arrangements may be devised by one skilled in the art.

## Claims

1. A method of allocating resources for transmission of data in a data network comprising one or more intermediate nodes (30), wherein a transmitting terminal (10) is connected to a transmitting ingress facility (20) of said network and a receiving terminal (11) is connected to a receiving egress facility (21) of said network through which said data is transmitted from said transmitting terminal to said receiving terminal, said method being characterised by the steps of:
determining at said ingress facility whether an amount of packet switching bandwidth required for the transmission of data from the transmitting terminal to the receiving terminal is available at the transmitting terminal ingress facility to said network (408);
if said amount of packet switching bandwidth is available at the ingress facility, allocating said amount of bandwidth to the transmitting terminal (410);
if said amount of packet switching bandwidth is available at the ingress facility, transmitting a request message (412) to allocate said amount of bandwidth, from said ingress to said egress facility;
responsive to said request message, determining, in said egress facility, whether said amount of packet switching bandwidth is available at the receiving terminal egress facility from said network (506);
if said amount of packet switching bandwidth is available at the egress facility, allocating said amount of bandwidth in said egress facility to the receiving terminal (514); and
if said allocating steps have been executed successfully, transmitting data at the packet switching bandwidth allocated in said allocating steps from said ingress facility over ones of said intermediate nodes to said egress facility without checking for available packet bandwidth in intermediate nodes prior to commencement of said transmitting (516).

2. A method as claimed in claim 1, comprising the step of:
if said amount of bandwidth is not available at the ingress facility, or is not available at the egress facility, recording a request for the amount of bandwidth at an ingress controller for the transmitting terminal (45).

3. A method as claimed in claim 2, comprising the step of
recording, in said ingress controller, data defining the destination, the amount of bandwidth, and data identifying a time of the request (46,47,48).

4. A method as claimed in claim 3, comprising the step of:
periodically checking for requests for bandwidth in the recorded data and repeating attempts to allocate said requested bandwidth in an ingress controller for said receiving terminal and an egress controller for said transmitting terminal (702).

5. A method as claimed in claim 4, comprising the steps of:
separately recording all requests whose age exceeds a predetermined threshold (708); and
attempting to allocate bandwidth to the separately recorded requests on a priority basis.

6. A method as claimed in claim 5, wherein said step of attempting to allocate comprises:
sending repeated requests to allocate bandwidth to the egress controller.

7. A method as claimed in claim 1, wherein the step of determining whether said amount of bandwidth is available at the egress comprises:
sending a request message from an ingress controller for said transmitting terminal to an egress controller for said receiving terminal (414);
responsive to receipt of the request message, checking for available receive bandwidth at the egress facility (514); and
sending a message from the egress controller to the ingress controller reporting on the result of the checking step (516).

8. A method as claimed in claim 7, comprising:
if said checking step determines that said amount of bandwidth is available, allocating said amount of bandwidth (516).

9. A method as claimed in claim 7, wherein the checking step comprises the step of:
if all of said amount of bandwidth is not available at the egress facility, but at least a predetermined fraction of said amount of bandwidth is available at the egress facility, allocating the at least a predetermined fraction; and
the sending step comprises:
sending a response message (80) to the ingress controller reporting how much bandwidth was allocated (83).

10. A method as claimed in claim 1, wherein said data network is a broadband ISDN network (30).

11. A method as claimed in claim 1, wherein the step of allocating bandwidth at an ingress controller for said transmitting terminal comprises:
periodically sorting by age, requests for which transmit bandwidth has not been allocated; and
attempting to allocate bandwidth for oldest requests first (702).

## Patentansprüche

1. Verfahren zum Belegen von Betriebsmitteln zum Senden von Daten in einem Datennetz mit einem oder mehreren Transitknoten (30), wobei eine sendende Endeinrichtung (10) mit einer sendenden Eingangseinrichtung (20) des Netzes und eine empfangende Endeinrichtung (11) mit einer empfangenden Ausgangseinrichtung (21) des Netzes, durch das Daten von der sendenden Endeinrichtung zur empfangenden Endeinrichtung gesendet werden, verbunden ist, wobei das Verfahren durch folgende Schritte gekennzeichnet ist:
Bestimmen an der Eingangseinrichtung, ob eine für das Senden von Daten von der sendenden Endeinrichtung zur empfangenden Endeinrichtung erforderliche Größe an Paketvermittlungsbandbreite an der Eingangseinrichtung der sendenden Endeinrichtung zum Netz zur Verfügung steht (408);
falls die Größe an Paketvermittlungsbandbreite an der Eingangseinrichtung zur Verfügung steht, Belegen der Größe an Bandbreite für die sendende Endeinrichtung (410);
falls die Größe an Paketvermittlungsbandbreite an der Eingangseinrichtung zur Verfügung steht, Senden einer Anforderungsmeldung (412) zum Belegen der Größe an Bandbreite von der Eingangs- zur Ausgangseinrichtung;
als Reaktion auf die Anforderungsmeldung, Bestimmen in der Ausgangseinrichtung, ob die Größe an Paketvermittlungsbandbreite an der Ausgangseinrichtung der empfangenden Endeinrichtung vom Netz zur Verfügung steht (506);
falls die Größe an Paketvermittlungsbandbreite an der Ausgangseinrichtung zur Verfügung steht, Belegen der Größe der Bandbreite in der Ausgangseinrichtung für die empfangende Endeinrichtung (514); und
falls die Belegungsschritte erfolgreich ausgeführt worden sind, Senden von Daten mit der in den Belegungsschritten belegten Paketvermittlungsbandbreite von der Eingangseinrichtung über einzelne der Transitknoten zu der Ausgangseinrichtung, ohne vor Beginn des Sendens auf verfügbare Paketbandbreite in den Transitknoten zu überprüfen (516).

2. Verfahren nach Anspruch 1, mit folgenden Schritten:
falls die Größe an Bandbreite an der Eingangseinrichtung nicht zur Verfügung steht oder an der Ausgangseinrichtung nicht zur Verfügung steht, Aufzeichnen einer Anforderung für die Größe an Bandbreite an einer Eingangssteuerung für die sendende Endeinrichtung (45).

3. Verfahren nach Anspruch 2, mit dem Schritt des
Aufzeichnens in der Eingangssteuerung von das Ziel definierenden Daten, der Größe an Bandbreite und eine Zeit der Anforderung identifizierenden Daten (46, 47, 48).

4. Verfahren nach Anspruch 3, das folgenden Schritt umfaßt:
periodisches Überprüfen auf Anforderungen nach Bandbreite in den aufgezeichneten Daten und Wiederholen von Versuchen, die angeforderte Bandbreite in einer Eingangssteuerung für die empfangende Endeinrichtung und einer Ausgangssteuerung für die sendende Endeinrichtung zu belegen (702).

5. Verfahren nach Anspruch 4, mit folgenden Schritten:
getrenntes Aufzeichnen aller Anforderungen, deren Alter einen vorbestimmten Schwellwert übersteigt (708); und
Versuch der Belegung von Bandbreite für die getrennt aufgezeichneten Anforderungen auf Prioritätsbasis.

6. Verfahren nach Anspruch 5, wobei der Schritt, des Belegungsversuchs folgendes umfaßt:
Senden von wiederholten Anforderungen zur Belegung von Bandbreite an die Ausgangssteuerung.

7. Verfahren nach Anspruch 1, wobei der Schritt des Bestimmens, ob die Größe an Bandbreite an dem Ausgang zur Verfügung steht, folgendes umfaßt:
Senden einer Anforderungsmeldung von einer Eingangssteuerung für die sendende Endeinrichtung an eine Ausgangssteuerung für die empfangende Endeinrichtung (414);
als Reaktion auf den Empfang der Anforderungsmeldung, Überprüfung auf zur Verfügung stehende Empfangsbandbreite an der Ausgangseinrichtung (514); und
Senden einer Meldung von der Ausgangssteuerung zur Eingangssteuerung mit einem Bericht über das Ergebnis des Überprüfungsschritts (516).

8. Verfahren nach Anspruch 7, mit folgendem:
falls in dem Überprüfungsschritt festgestellt wird, daß die Größe an Bandbreite zur Verfügung steht, Belegen der Größe an Bandbreite (516).

9. Verfahren nach Anspruch 7, wobei der Überprüfungsschritt folgenden Schritt umfaßt:
falls nicht die gesamte Größe an Bandbreite an der Ausgangseinrichtung zur Verfügung steht, sondern mindestens ein vorbestimmter Anteil der Größe an Bandbreite an der Ausgangseinrichtung zur Verfügung steht, Belegen des mindestens vorbestimmten Anteils; und
der Sendeschritt folgendes umfaßt:
Senden einer Antwortmeldung (80) an die Eingangssteuerung mit einem Bericht, wieviel Bandbreite belegt wurde (83).

10. Verfahren nach Anspruch 1, wobei es sich bei dem Datennetz um ein Breitband-ISDN-Netz (30) handelt.

11. Verfahren nach Anspruch 1, wobei der Schritt des Belegens von Bandbreite an einer Eingangssteuerung für die sendende Endeinrichtung folgendes umfaßt:
periodisches Sortieren von Anforderungen, für die Sendebandbreite nicht belegt worden ist, nach Alter; und
Versuch der Belegung von Bandbreite zuerst für älteste Anforderungen (702).

## Revendications

1. Procédé d'attribution de ressources pour la transmission de données dans un réseau de données comprenant un ou plusieurs noeuds intermédiaires (30), dans lequel un terminal d'émission (10) est connecté à une installation d'entrée d'émission (20) dudit réseau et un terminal de réception (11) est connecté à une installation de sortie de réception (21) dudit réseau, par lequel lesdites données sont transmises depuis ledit terminal d'émission vers ledit terminal de réception, ledit terminal étant caractérisé par les étapes de:
détermination à ladite installation d'entrée si une quantité de largeur de bande de commutation par paquets requise pour la transmission de données depuis le terminal d'émission vers le terminal de réception existe ou non à l'installation d'entrée du terminal d'émission vers ledit réseau (408);
si ladite quantité de largeur de bande de commutation par paquets existe à l'installation d'entrée, attribution de ladite quantité de largeur de bande au terminal d'émission (410);
si ladite quantité de largeur de bande de commutation par paquets existe à l'installation d'entrée, transmission d'un message de demande (412) pour attribuer ladite quantité de largeur de bande, depuis ladite installation d'entrée vers ladite installation de sortie;
en réponse audit message de demande, détermination, dans ladite installation de sortie, si ladite quantité de largeur de bande de commutation par paquets existe ou non à l'installation de sortie du terminal de réception à partir dudit réseau (506);
si ladite quantité de largeur de bande de commutation par paquets existe à l'installation de sortie, attribution de ladite quantité de largeur de bande dans ladite installation de sortie au terminal de réception (514); et
si les étapes d'attribution ont été exécutées avec succès, transmission de données à la largeur de bande de commutation par paquets attribuée dans lesdites étapes d'attribution depuis ladite installation d'entrée sur des noeuds desdits noeuds intermédiaires vers ladite installation de sortie sans vérifier la largeur de bande de commutation par paquets existant dans les noeuds intermédiaires avant le commencement de ladite transmission (516).

2. Procédé tel que revendiqué à la revendication 1, comprenant l'étape:
si ladite quantité de largeur de bande existe à l'installation d'entrée, ou n'existe pas à l'installation de sortie, d'enregistrement d'une demande pour la quantité de largeur de bande au niveau d'un contrôleur d'entrée pour le terminal d'émission (45).

3. Procédé tel que revendiqué à la revendication 2, comprenant l'étape:
d'enregistrement, dans ledit contrôleur d'entrée, de données définissant la destination, la quantité de largeur de bande, et de données identifiant un temps de la demande (46, 47, 48).

4. Procédé tel que revendiqué à la revendication 3, comprenant l'étape:
de vérification périodique des demandes de largeur de bande dans les données enregistrées et des tentatives répétées d'attribution de ladite largeur de bande demandée dans un contrôleur d'entrée pour ledit terminal de réception et un contrôleur de sortie pour ledit terminal d'émission (702).

5. Procédé tel que revendiqué à la revendication 4, comprenant les étapes:
d'enregistrement séparé de toutes les demandes dont l'âge dépasse un seuil prédéterminé (708); et
de tentative d'attribution de largeur de bande à des demandes enregistrées séparément selon un principe de priorité.

6. Procédé tel que revendiqué à la revendication 5, dans lequel ladite étape de tentative d'attribution comprend:
l'envoi de demandes répétées pour attribuer une largeur de bande au contrôleur de sortie.

7. Procédé tel que revendiqué à la revendication 1, dans lequel l'étape de détermination de l'existence ou non de ladite quantité de largeur de bande à la sortie comprend:
l'envoi d'un message de demande à partir d'un contrôleur d'entrée pour ledit terminal d'émission à un contrôleur de sortie pour ledit terminal de réception (414);
en réponse à la réception du message de demande, la vérification de la largeur de bande de réception existant à l'installation de sortie (514); et
l'envoi d'un message à partir du contrôleur de sortie vers le contrôleur d'entrée signalant le résultat de l'étape de vérification (516).

8. Procédé tel que revendiqué à la revendication 7, comprenant:
si ladite étape de vérification détermine que ladite quantité de largeur de bande existe, l'attribution de ladite quantité de largeur de bande (516).

9. Procédé tel que revendiqué à la revendication 7, dans lequel l'étape de vérification comprend l'étape:
si la totalité de ladite quantité de largeur de bande n'existe pas à l'installation de sortie, mais au moins une fraction prédéterminée de ladite quantité de largeur de bande existe à l'installation de sortie, d'attribution d'au moins la fraction prédéterminée; et
l'étape d'envoi comprend:
l'envoi d'un message de réponse (80) au contrôleur d'entrée signalant la quantité de largeur de bande qui a été attribuée (83).

10. Procédé tel que revendiqué à la revendication 1, dans lequel ledit réseau de données est un réseau RNIS à large bande (30).

11. Procédé tel que revendiqué à la revendication 1, dans lequel l'étape d'attribution de largeur de bande au niveau d'un contrôleur d'entrée pour ledit terminal d'émission comprend:
le tri périodique par âge, des demandes pour lesquelles une largeur de bande d'émission n'a pas été attribuée; et
la tentative d'attribution de largeur de bande pour les demandes les plus vieilles en premier (702).
